# EUROPEAN PATENT APPLICATION

(11) **EP 4 723 768 A1**
(43) Date of publication of application: **08.04.2026**
(21) Application number: 24204622.5
(22) Date of filing: 04.10.2024
(51) Int. Cl.: H04W 68/02, H04W 52/02

(54) **PAGING REPETITION CONFIGURATION FOR IMPROVING ENERGY CONSUMPTION**

(71) Applicant: Nokia Technologies Oy, 02610 Espoo (FI)
(72) Inventor: Kaikkonen, Jorma Johannes, 90800 Oulu (FI); Kainulainen, Jani-Pekka, Cottenham, Cambridgeshire, CB24 8BA (GB); Koskinen, Jussi-Pekka, 90420 Oulu (FI); Dalsgaard, Lars, 90230 Oulu (FI); Venkatraman, Ganesh, 90540 Oulu (FI)
(74) Representative: Samson & Partner Patentanwälte mbB

(57) **Abstract**

Methods, apparatuses, and systems are provided for monitoring paging occasions. a method for monitoring paging occasions is provided. A user equipment in idle state or inactive state may receive a paging repetition configuration comprising a number of configured repetitions of a paging message, and, in response to determining that the paging message does not comprise a paging record for the user equipment, skip monitoring of a number of subsequent paging occasions based on the paging repetition configuration. A base station may support this behavior by transmitting the paging repetition configuration.

## Description

### THECHNICAL FIELD

The subject disclosure generally relates to wireless communication systems and, in particular, to providing a paging repetition configuration for improving energy consumption.

### BACKGROUND

Wireless communication systems, also referred to as mobile communication systems, are under constant development. In the developments for the 5^{th} generation (5G) / New Radio (NR) mobile communication concepts of the 3rd Generation Partnership Project (3GPP) and generally for future networks, energy saving becomes more and more important, in particular, for lightweight user equipments (UE), wearables, sensors, and the like, which do only have a limited battery power, may even not have a rechargeable or replaceable battery, and/or for which replacement or charging of batteries is complex or costly.

In order to save energy, UEs may be equipped, besides a main receiver with an additional low-power receiver. When a UE is not in active use, e.g., in an idle or inactive state, the main receiver can be sent into a sleep state, while the low-power receiver stays awake and monitors a low-power wake-up signal that triggers the UE and, in particular, the main receiver, to wake up for paging monitoring.

While this approach already provides a UE power saving gain, main receivers of UEs may be powered-on and powered-off for monitoring occasions that are relevant for a group of UEs but for which no paging record in a paging message is addressed to the particular UE. First approaches have been discussed for providing a further improvement in this regard, however, there is still a need for an efficient and practicable paging monitoring enhancement.

### SUMMARY

According to a first aspect of the disclosure, a method for monitoring paging occasions is provided. The method is performed by a user equipment in idle state or inactive state and comprises receiving a paging repetition configuration comprising a number of configured repetitions of a paging message, and, in response to determining that the paging message does not comprise a paging record for the user equipment, skipping monitoring of a number of subsequent paging occasions based on the paging repetition configuration.

In some embodiments, the method further comprises determining a current paging occasion position index and determining the number of subsequent paging occasions based on the number of configured repetitions of a paging message and the current paging occasion position index. In some further embodiments, the number of subsequent paging occasions to be skipped is determined by subtracting the current paging occasion position index modulo the number of configured repetitions of a paging message from the number of configured repetitions of a paging message.

In some embodiments, the method further comprises, in response to determining that the number of subsequent paging occasions has been reached, resuming monitoring a next paging occasion. In some further embodiments, the paging repetition configuration is received via a radio resource control message, configured via a system information message, or predefined. In some embodiments, the method further comprises skipping monitoring of one or more low-power wake-up signal messages corresponding to the subsequent paging occasions and/or one or more paging early indication messages corresponding to the subsequent paging occasions.

In some embodiments, the method further comprises receiving a paging repetition indication field in a message associated with a paging message of a paging occasion, wherein the paging indication field indicates that the paging message is repeated according to the paging repetition configuration. In further embodiments, the message associated with the paging message is the paging message itself, a downlink control information indicating the paging message, or a low-power wake-up signal message corresponding to the paging occasion.

According to a second aspect of the disclosure, a user equipment for monitoring paging occasions is provided and comprises at least one memory and at least one processor. The at least one processor is configured to, when the user equipment is in idle state or inactive state, execute the method according to any embodiment described herein.

According to a third aspect of the disclosure, a method for supporting monitoring of paging occasions is provided. The method is performed by a base station and comprises transmitting a paging repetition configuration comprising a number of configured repetitions of a paging message. The paging repetition configuration indicates that a user equipment in idle state or inactive state is allowed to skip monitoring, in response to determining that the paging message does not comprise a paging record for the user equipment, of a number of subsequent paging occasions based on the paging repetition configuration.

In some embodiments, the paging repetition configuration further indicates that the user equipment in idle state or inactive state is allowed, in response to determining that the number of subsequent paging occasions has been reached, to resume monitoring a next paging occasion. In some further embodiments, the paging repetition configuration is received via a radio resource control message, configured via a system information message, or predefined.

In some embodiments, the paging repetition configuration further indicates that a user equipment in idle state or inactive state is allowed to skip monitoring, in response to determining that the paging message does not comprise a paging record for the user equipment, of one or more low-power wake-up signal messages corresponding to the subsequent paging occasions and/or one or more paging early indication messages corresponding to the subsequent paging occasions.

In some embodiments, the method further comprises transmitting a paging repetition indication field in a message associated with a paging message of a paging occasion, wherein the paging indication field indicates that the paging message is repeated according to the paging repetition configuration. In further embodiments, the message associated with the paging message is the paging message itself, a downlink control information indicating the paging message, or a low-power wake-up signal message corresponding to the paging occasion.

According to a fourth aspect of the disclosure, a base station for supporting monitoring of paging occasions is provided and comprises at least one memory, and at least one processor. The at least one processor is configured to execute the method according to any embodiment described herein.

The above-noted aspects and features may be implemented in systems, apparatuses, methods, articles and non-transitory computer-readable media depending on the desired configuration. The subject disclosure may be implemented in and used with a number of different types of devices, including but not limited to cellular phones, tablet computers, wearable computing devices, portable media players, and any of various other computing devices.

This summary is intended to provide a brief overview of some of the aspects and features according to the subject disclosure. Accordingly, it will be appreciated that the above-described features are merely examples and should not be construed to narrow the scope of the subject disclosure in any way. Other features, aspects, and advantages of the subject disclosure will become apparent from the following detailed description, drawings and claims.

### TERMINOLOGY

To facilitate understanding on the terminologies in the subject disclosure, the following list of the most relevant abbreviations is provided:
- 3GPP: 3rd Generation Partnership Program
- AMF: Access and Mobility Management Function
- AS: Access Stratum
- BS: Base Station
- CN: Core Network
- DRX: Discontinuous Reception
- DTX: Discontinuous Transmission
- eDRX: extended DRX
- eNB: LTE Base Station, E-UTRAN NodeB
- FTP: File Transfer Protocol
- gNB: 5G Base Station, 5G NodeB
- I-DRX: Idle Mode DRX
- ID: Identifier
- IM: Instant Messaging
- IoT: Internet of Things
- IQ: In-phase/Quadrature (Signal Processing)
- LO: Low-power Receiver Monitoring Occasion
- LP: Low-Power
- LR: Low-power Receiver
- MR: Main Receiver
- NG: Next Generation (also 5G for 5^{th} Generation)
- PDCCH: Physical Downlink Control Channel
- PDSCH: Physical Downlink Shared Channel
- PDU: Processing Data Unit
- PEI: Paging Early Indication
- PF: Paging Frame
- PO: Paging Occasion
- PSS: Primary Synchronization Signal
- PTW: Paging Time Window
- RAN: Radio Access Network
- RNTI: Radio Network Temporary Identifier
- RRC: Radio Resource Control
- RRM: Radio Resource Management
- SI: Study Item
- SS: Synchronization Signal
- SSB: Synchronization Signal Block
- SSS: Secondary Synchronization Signal
- UE: User Equipment
- WI: Work Item
- WUR: Wake-Up Receiver
- WUS: Wake-Up Signal

### BRIEF DESCRIPTION OF THE DRAWINGS

A better understanding of the subject disclosure may be obtained when the following detailed description of various embodiments is considered in conjunction with the following drawings, in which:
FIG. 1 shows a schematic diagram of an example wireless network.
FIG. 2 shows a schematic diagram of an example wireless device.
FIG. 3 shows a schematic diagram of an example network node.
FIG. 4 is a general message flow diagram of paging monitoring enhancements according to a main embodiment.
FIG. 5 is a flow chart of paging monitoring enhancement according to the disclosure.
FIG. 6 is a flow chart of paging monitoring enhancement with additional aspects according to the disclosure.
FIG. 7 illustrates behaviors of a user equipment being equipped with a main and a low-power receiver.
FIG. 8 shows a message flow diagram of paging monitoring with a user equipment being equipped with a low-power receiver and a main receiver.
FIG. 9 shows a message flow diagram of a paging monitoring enhancement with predefined skipping of one paging occasion according to embodiments of the disclosure.
FIG. 10 shows a message flow diagram of a paging monitoring enhancement with explicit field for skipping a flexible number of paging occasions according to embodiments of the disclosure.
FIG. 11 shows a message flow diagram without the need of an explicit field in a paging message according to embodiments of the disclosure.

### DETAILED DESCRIPTION

The examples and embodiments set forth below represent information to enable those skilled in the art to practice the subject disclosure. Upon reading the following description in light of the accompanying drawing figures, those skilled in the art will understand the concepts of the description and will recognize applications of these concepts not particularly addressed herein. It should be understood that these concepts and applications fall within the scope of the description.

In the following description, numerous specific details are set forth. However, it is understood that embodiments may be practiced without these specific details. In other instances, well-known circuits, structures, and techniques have not been shown in detail in order not to obscure the understanding of the description. Those of ordinary skill in the art, with the included description, will be able to implement appropriate functionality without undue experimentation.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to implement such feature, structure, or characteristic in connection with other embodiments whether or not explicitly described.

As used herein, "plurality" means two or more. As used herein, a "set" of items may include one or more of such items. As used herein, whether in the subject disclosure or the claims, the terms "comprising", "including", "carrying", "having", "containing", "involving", and the like are to be understood to be open-ended, i.e., to mean including but not limited to. Only the transitional phrases "consisting of" and "consisting essentially of", respectively, are closed or semi-closed transitional phrases with respect to claims. Use of ordinal terms such as "first", "second", "third", etc., in the claims or the subject disclosure to modify an element does not by itself connote any priority, precedence, or order of one element over another or the temporal order in which acts of a method are performed, but are used merely as labels to distinguish one element having a certain name from another element having a same name (but for use of the ordinal term) to distinguish the elements. As used herein, "and/or" and "at least one of" means that the listed items are alternatives, but the alternatives also include any combination of the listed items.

### General Principles of Mobile Communication

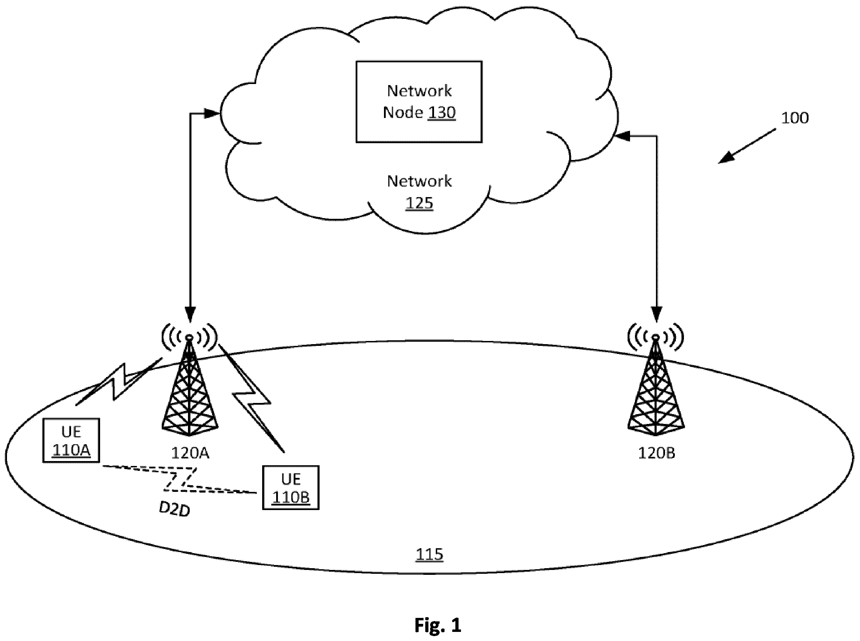

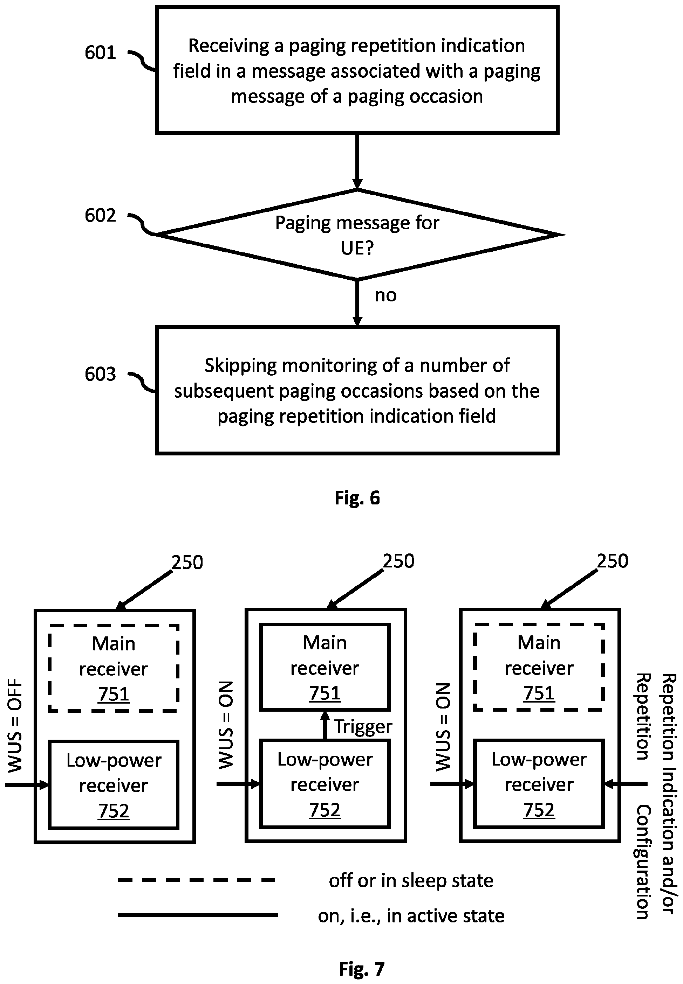

Before explaining the examples according to the subject disclosure in detail, certain general principles of a wireless communication system are briefly explained with reference to FIGS. 1 to 3 to assist in understanding the technology underlying the described examples. In FIG. 7, a further development of UEs is described that supports the methods described herein.

FIG. 1 illustrates an example of a wireless network 100 that may be used for wireless communications. Wireless network 100 includes wireless devices, such as UEs 110 (e.g., 110A-110B), and network nodes 120/130, such as radio access nodes 120 (e.g., 120A-120B, which may be network nodes like eNBs, gNBs, etc.), connected to one or more further network nodes 130 over an interconnecting network 125. The network 100 may use any suitable deployment scenarios. UEs 110 within coverage area 115 may each be capable of communicating directly with radio access nodes 120 over a wireless or air interface. In some embodiments, UEs 110 may also be capable of communicating with each other via D2D communication.

As an example, UE 110A may communicate with radio access node 120A over a wireless or air interface. That is, UE 110A may transmit wireless signals to and/or receive wireless signals from radio access node 120A. The wireless signals may contain voice traffic, data traffic, control signals, and/or any other suitable information.

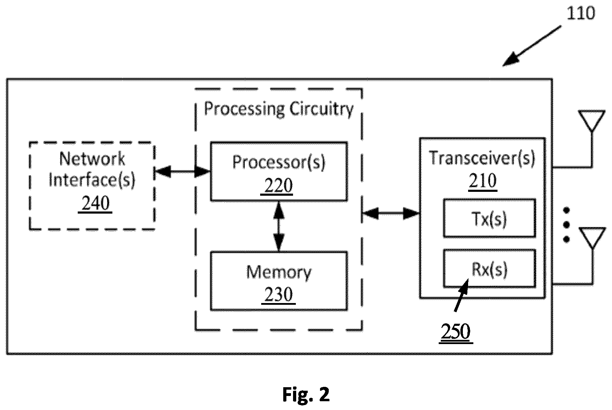

As used herein, the term "user equipment" (UE) (e.g., UE 110) has the full breadth of its ordinary meaning and may refer to any type of wireless device which may communicate with a network node (e.g., network node 120) and/or with another UE (e.g., different to UE 110) in a cellular or mobile or wireless communication system. Examples of UE are target device, D2D UE, machine type UE or UE capable of machine-to-machine (M2M) communication, personal digital assistant, tablet, mobile terminal, smart phone, laptop embedded equipped (LEE), laptop mounted equipment (LME), USB dongles, ProSe UE, vehicle-to-vehicle (V2V) UE, V2X UE, MTC UE, eMTC UE, FeMTC UE, UE Cat 0, UE Cat Ml, narrow band IoT (NB-IoT) UE, UE Cat NB1, etc. Example embodiments of a UE are described in more detail below with respect to FIG. 2.

In some embodiments, an area of wireless signal coverage 115 associated with a radio access node 120 may be referred to as a cell. However, particularly with respect to the 5^{th} generation (5G) / New Radio (NR) mobile communication concepts, beams, such as the herein described multicast radio beams (MRBs) may be used within cells for communication.

With respect to a beam-based mobile communication system, the radio access node 120 (base station) may transmit a beamformed signal to the UE 110 in one or more transmit directions (transmission beam, Tx beam). The UE 110 may receive the beamformed signal from the base station 120 in one or more receive directions (reception beam, Rx beam). The UE 110 may also transmit a beamformed signal to the base station 120 in one or more directions and the base station 120 may receive the beamformed signal from the UE 110 in one or more directions. The base station 120 and the UE 110 may determine the best receive and transmit directions, e.g., *best* in the sense of these directions leading to the highest link quality or fulfilling other quality conditions in the most suitable manner, for each of the base station/UE pairs.

The interconnecting network 125 may refer to any interconnecting system capable of transmitting audio, video, signals, data, messages, etc., or any combination of the preceding. The interconnecting network 125 may include all or a portion of a public switched telephone network (PSTN), a public or private data network, a local area network (LAN), a metropolitan area network (MAN), a wide area network (WAN), a local, regional, or global communication or computer network such as the Internet, a wireline or wireless network, an enterprise intranet, or any other suitable communication link, including combinations thereof.

In some embodiments, the network node 130 may be a core network node, managing the establishment of communication sessions and other various other functionalities for UEs 110. Examples of network node 130 may include mobile switching center (MSC), MME, serving gateway (SGW), packet data network gateway (PGW), operation and maintenance (O&M), operations support system (OSS), SON, positioning node (e.g., Enhanced Serving Mobile Location Center, E-SMLC), location server node, Minimization of Drive Tests (MDT) node, etc. UEs 110 may exchange certain signals with the network node 130 using the non-access stratum (NAS) layer. In non-access stratum signaling, signals between UEs 110 and the network node 130 may be transparently passed through the radio access network. In some embodiments, radio access nodes 120 may interface with one or more network nodes 130 over an internode interface.

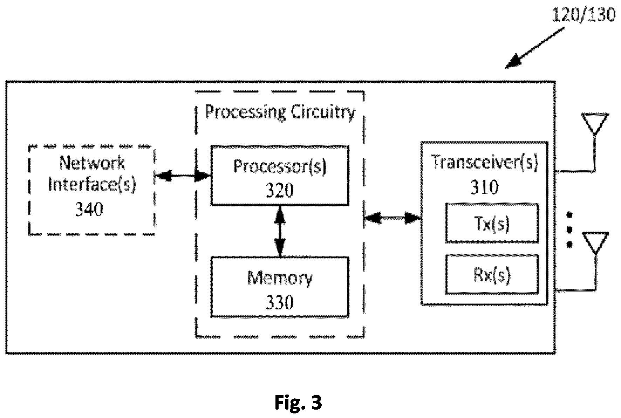

As used herein, the term "network node" has the full breadth of its ordinary meaning and may correspond to any type of radio access node (e.g., radio network node 120) or any network node, which may communicate with a UE and/or with another network node in a cellular or mobile or wireless communication system. Examples of network nodes are NodeB, MeNB, SeNB, a network node may belonging to MCG or SCG, base station (BS), multistandard radio (MSR) radio access node such as MSR BS, eNodeB, network controller, radio network controller (RNC), base station controller (BSC), relay, donor node controlling relay, base transceiver station (BTS), access point (AP), transmission point, transmission node, RRU, RRH, node in distributed antenna system (DAS), core network node (e.g., MSC, MME, etc.), O&M, OSS, Self-organizing Network (SON), positioning node (e.g., E-SMLC), MDT, test equipment, etc. Example embodiments of a network node are described in more detail below with respect to FIG. 3.

In some embodiments, network node 120 may be a distributed radio access node. The components of the radio access node 120, and their associated functions, may be separated into two main units (or sub-radio network nodes) which may be referred to as the central unit (CU) and the distributed unit (DU). Different distributed radio network node architectures are possible. For instance, in some architectures, a DU may be connected to a CU via dedicated wired or wireless link (e.g., an optical fiber cable) while in other architectures, a DU may be connected a CU via a transport network. Also, how the various functions of the radio access node 120 are separated between the CU(s) and DU(s) may vary depending on the chosen architecture.

In some embodiments, radio access nodes 120 may communicate with each other over terrestrial or other connections. The communication between the radio access nodes 120 may, e.g., in a 5G / NR communication system may be achieved by using an Xn interface connecting the radio access nodes 120.

Exemplary wireless communication systems are architectures standardized by the 3rd Generation Partnership Project (3GPP). A latest 3GPP based development is often referred to as the long-term evolution (LTE) of the Universal Mobile Telecommunications System (UMTS) radio-access technology (RAT). The various development stages of the 3GPP specifications are referred to as releases. More recent developments of the LTE are often referred to as LTE Advanced (LTE-A). The LTE (LTE-A) employs a radio mobile architecture known as the Evolved Universal Terrestrial Radio Access Network (E-UTRAN) and a core network known as the Evolved Packet Core (EPC). Base stations of such systems are known as evolved or enhanced Node Bs (eNBs) and provide E-UTRAN features such as user plane Packet Data Convergence/Radio Link Control/Medium Access Control/Physical layer protocol (PDCP/RLC/MAC/PHY) and control plane Radio Resource Control (RRC) protocol terminations towards the communication devices. Other RAT examples comprise those provided by base stations of systems that are based on technologies such as WLAN and/or Worldwide Interoperability for Microwave Access (WiMax). A base station may provide coverage for an entire cell or similar radio service area. Core network elements include Mobility Management Entity (MME), Serving Gateway (S-GW) and Packet Gateway (P-GW).

An example of a suitable communications system is the 5G or NR concept. Network architecture in NR may be similar to that of LTE-A. Base stations of NR systems may be known as next generation Node Bs (gNBs). Changes to the network architecture may depend on the need to support various radio technologies and finer Quality of Service (QoS) support, and some on-demand requirements for QoS levels to support Quality of Experience (QoE) of user point of view. Also network aware services and applications, and service and application aware networks may bring changes to the architecture. Those are related to Information Centric Network (ICN) and User-Centric Content Delivery Network (UC-CDN) approaches. NR may use multiple input-multiple output (MIMO) antennas, many more base stations or nodes than the LTE (a so-called small cell concept), including macro sites operating in co-operation with smaller stations and perhaps also employing a variety of radio technologies for better coverage and enhanced data rates.

Future networks may utilize network functions virtualization (NFV) which is a network architecture concept that proposes virtualizing network node functions into "building blocks" or entities that may be operationally connected or linked together to provide services. A virtualized network function (VNF) may comprise one or more virtual machines running computer program codes using standard or general type servers instead of customized hardware. Cloud computing or data storage may also be utilized. In radio communications this may mean node operations to be carried out, at least partly, in a server, host or node operationally coupled to a remote radio head. It is also possible that node operations will be distributed among a plurality of servers, nodes, or hosts. It should also be understood that the distribution of labor between core network operations and base station operations may differ from that of the LTE or even be non-existent.

An example 5G core network (CN) comprises functional entities. The CN is connected to a UE via the radio access network (RAN). An UPF (User Plane Function) whose role is called PSA (PDU Session Anchor) may be responsible for forwarding frames back and forth between the DN (data network) and the tunnels established over the 5G towards the UEs exchanging traffic with the data network (DN). The UPF is controlled by an SMF (Session Management Function) that receives policies from a PCF (Policy Control Function). The CN may also include an AMF (Access & Mobility Function).

Generally, all concepts disclosed herein may be applicable to different communication networks, comprising but not limited to LTE, LTE-A, 5G, 5G advanced, 6G, and other future or already implemented networks.

FIG. 2 is a schematic diagram of an apparatus for the UE. In an embodiment, the apparatus may comprise the UE, in yet another embodiment the apparatus is comprised in the UE, and in another embodiment the apparatus is the UE. The apparatus may comprise a wireless device. The apparatus may comprise at least one processor 220 and at least memory 230 storing computer program instructions that, when executed by the at least one processor 220, cause the apparatus to carry out the embodiments of the UE 110 described herein. In such examples, method processes may also be distributed among the at least one processor 220 and not all processors 220 execute all processes described herein. UE 110 includes a transceiver 210, processor 220, memory 230, and a network interface 240. In some embodiments, the transceiver 210 facilitates transmitting wireless signals to and receiving wireless signals from radio access node 120 (e.g., via transmitter(s) (Tx), receiver(s) (Rx) 250 and antenna(s)). A further detailed example of receivers 250 is shown in FIG. 7 and explained below. The processor 220 executes instructions to provide some or all of the functionalities described herein as being provided by UE 110, and the memory 230 stores the instructions executed by the processor 220. In some embodiments, the processor 220 and the memory 230 form processing circuitry.

The processor 220 may include any suitable combination of hardware to execute instructions and manipulate data to perform some or all of the described functions of UE 110 described herein. In some embodiments, the processor 220 may include, for example, one or more computers, one or more central processing units (CPUs), one or more microprocessors, one or more application specific integrated circuits (ASICs), one or more field programmable gate arrays (FPGAs) and/or other logic.

The memory 230 is generally operable to store instructions, such as a computer program, software, an application including one or more of logic, rules, algorithms, code, tables, etc. and/or other instructions capable of being executed by a processor 220. Examples of memory 230 include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non- transitory computer-readable and/or computer-executable memory devices that store information, data, and/or instructions that may be used by the processor 220 of UE 110. For example, the memory 230 includes computer program code causing the processor 220 to perform processing according to the methods described herein.

The network interface 240 is communicatively coupled to the processor 220 and may refer to any suitable device operable to receive input for UE 110, send output from UE 110, perform suitable processing of the input or output or both, communicate to other devices, or any combination thereof. The network interface 240 may include appropriate hardware (e.g., port, modem, network interface card, etc.) and software, including protocol conversion and data processing capabilities, to communicate through a network.

Other embodiments of UE 110 may include additional components beyond those shown in FIG. 2 that may be responsible for providing certain aspects of the wireless device's functionalities, including any of the functionalities described herein and/or any additional functionalities (including any functionality necessary to support the mechanisms according to the subject disclosure). As an example, UE 110 may include input devices and circuits, output devices, and one or more synchronization units or circuits, which may be part of the processor 220. Input devices include mechanisms for entry of data into UE 110. For example, input devices may include input mechanisms, such as a microphone, input elements, a display, etc. Output devices may include mechanisms for outputting data in audio, video and/or hard copy format. For example, output devices may include a speaker, a display, etc.

In some embodiments, the wireless device UE 110 may comprise a series of modules configured to implement the functionalities of the wireless device described herein. Moreover, in some embodiments, the UE 110 may also comprise means for the functionalities described herein. A non-transitory computer readable medium with computer executable instructions stored thereon executed by the processor 220 of the UE 110 to perform the functionalities as described herein may also be provided.

It will be appreciated that the various modules may be implemented as combination of hardware and software, for instance, the processor, memory, and transceiver(s) of UE 110 shown in FIG. 2. Some embodiments may also include additional modules to support additional and/or optional functionalities. In particular, the UEs 110 considered herein, may comprise multiple receivers 250 for which an example is shown with respect to FIG. 7.

FIG. 3 is a schematic diagram of an example of an apparatus for a radio access node 120 or network node 130. The apparatus may comprise at least one processor 220 and at least memory 230 storing computer program instructions that, when executed by the at least one processor 220, cause the apparatus to carry out the embodiments of the core network node 130 or radio access node 120 described herein. In such examples, method processes may also be distributed among the at least one processor 320 and not all processors 320 execute all processes described herein. The example radio access node 120 or core network node 130 may include one or more of a transceiver 310, processor 320, memory 330, and network interface 340. In some embodiments, the transceiver 310 facilitates transmitting wireless signals to and receiving wireless signals from wireless devices, such as UE 110 (e.g., via transmitter(s) (Tx), receiver(s) (Rx), and antenna(s)). The processor 320 executes instructions to provide some or all of the functionalities described herein as being provided by the radio access node 120 or the core network node 130, the memory 330 stores the instructions executed by the processor 320. In some embodiments, the processor 320 and the memory 330 form processing circuitry. The network interface 340 may communicate signals to backend network components, such as a gateway, switch, router, Internet, Public Switched Telephone Network (PSTN), core network nodes or radio network controllers, etc.

The processor 320 may include any suitable combination of hardware to execute instructions and manipulate data to perform some or all of the described functions of the radio access node 120 or the core network node 130, such as those described herein. In some embodiments, the processor 320 may include, for example, one or more computers, one or more central processing units (CPUs), one or more microprocessors, one or more application specific integrated circuits (ASICs), one or more field programmable gate arrays (FPGAs) and/or other logic.

The memory 330 is generally operable to store instructions, such as a computer program, software, an application including one or more of logic, rules, algorithms, code, tables, etc. and/or other instructions capable of being executed by a processor 320. Examples of memory 330 include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non- transitory computer-readable and/or computer-executable memory devices that store information. For example, the memory 330 includes computer program code causing the processor 320 to perform processing according to the methods described herein.

In some embodiments, the network interface 340 is communicatively coupled to the processor 320 and may refer to any suitable device operable to receive input for the radio access node 120 or the core network node 130, send output from the radio access node 120 or the network node 130, perform suitable processing of the input or output or both, communicate to other devices, or any combination of the preceding. The network interface 340 may include appropriate hardware (e.g., port, modem, network interface card, etc.) and software, including protocol conversion and data processing capabilities, to communicate through a network.

Other embodiments of the radio access node 120 or the network node 130 may include additional components beyond those shown in FIG. 3 that may be responsible for providing certain aspects of the node's functionalities, including any of the functionalities described herein and/or any additional functionalities (including any functionality necessary to support the solutions described herein). The various different types of radio access nodes or core network nodes may include components having the same physical hardware but configured (e.g., via programming) to support different radio access technologies, or may represent partly or entirely different physical components.

Processors, interfaces, and memory similar to those described with respect to FIG. 3 may be included in other nodes (such as UE 110, network node 120, etc.). Other nodes may optionally include or not include a wireless interface (such as the transceiver described in FIG. 3).

In some embodiments, the radio access node 120 or the core network node 130 may comprise a series of modules configured to implement the functionalities of the radio access node 120 or the core network node 130 described herein. Moreover, in some embodiments, the radio access node 120 or the core network node 130 may also comprise means for the functionalities described herein. A non-transitory computer readable medium with computer executable instructions stored thereon executed by the processor 320 of the network node 120/130 to perform the functionalities as described herein may also be provided.

It will be appreciated that the various modules may be implemented as combination of hardware and software, for instance, the processor, memory, and transceiver(s) of the radio access node 120 or the core network node 130 shown in FIG. 3. Some embodiments may also include additional modules to support additional and/or optional functionalities.

### General Principles of the Solution Presented Herein

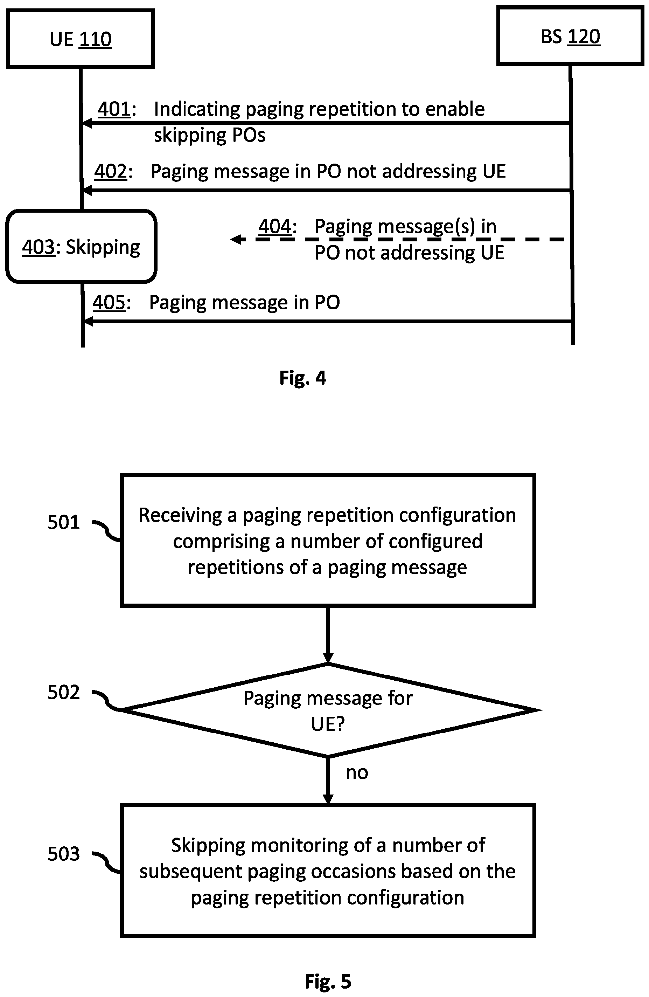

Before referring to FIGs. 4 to 11 and describing principles according to the disclosure, summarizing information and aspects related to the subject disclosure will be provided. It should be noted that all concepts described herein, although described, e.g., for one communication direction, e.g., for downlink communication, are applicable for the other direction as well, e.g., in the uplink (UL) communication. Moreover, concepts described for one entity, e.g., a UE 110, are applicable to another entity, e.g., a base station or network node 120, when considering for example another communication direction or another network setting as will be apparent to the skilled person.

In the developments for the 5th generation (5G) / New Radio (NR) mobile communication concepts of the 3rd Generation Partnership Project (3GPP) and generally for future networks, energy saving becomes more and more important. A commonly known approach to save energy is allowing a UE 110 to switch between sleep state and active state (i.e., DRX/DTX) and monitor its paging occasions (POs) and search for paging messages directed to itself when in active state. Similar to the delivery of system information, paging messages are provided by means of ordinary scheduled PDSCH transmissions in the POs configured for a UE 110. Therefore, with configured DRX, a device is only supposed to wake up at specific time instances to monitor for paging messages. Paging messages are indicated by a specific P-RNTI carried within the DCI of the PDCCH in the PO. Once detecting such a DCI, the device demodulates and decodes the corresponding PDSCH to extract the paging message(s). This means, there can be multiple paging messages, addressed to different UEs 110, within the same paging transmission. The P-RNTI is thus a shared identity and each paging messages comprises an identifier to identify its addressee. If a UE 110 finds a paging record for itself, it is informed that data is waiting for it and may, e.g., perform random access.

In Release 17, a paging early indication (PEI) has been defined in order to improve the UE power saving in idle and inactive modes. A PEI avoids unnecessary Paging Occasions (PO) reception by indicating to the UE 110 whether to monitor paging (PDCCH/PDSCH) and decode the paging message in its paging occasion. As described in Release 17 3GPP TS 38.304 (TS = Technical Specification), system information provided by the network may include PEI configuration. UEs 110 supporting PEI may then utilize the received PEI configuration to monitor one PEI occasion per DRX cycle (which is configured in the system information).

The PEI may further provide an indication of paging per subgroup of UEs 110. This allows to only page subgroups and not all UEs 110 with the same configured PO need to monitor the PO. Although the UE 110 can determine whether to skip a PO and the associated required synchronization signal(s) based on the PEI if its subgroup is not paged, the UE 110 will still monitor all POs for which its subgroup is paged irrespective of whether the paging message in the PO comprises a paging record for the UE 110. Moreover, for reception of PEI, the UEs 110 have to keep their receivers active. 3GPP working groups for Release 19 of the 5G Standards have currently agreed to provide a low-power wake-up signal and a corresponding receiver for NR with the following justification (the following paragraphs are almost literally cited from work item RP-234056).

5G systems are designed and developed to target for both mobile telephony and vertical use cases. Besides latency, reliability, and availability, UE energy efficiency is also critical to 5G. Currently, 5G devices may have to be recharged per week or day, depending on individual's usage time. In general, 5G devices consume tens of milliwatts in RRC idle/inactive state and hundreds of milliwatts in RRC connected state. Designs to prolong battery life is a necessity for improving energy efficiency as well as for better user experience.

Energy efficiency is even more critical for UEs without a continuous energy source, e.g., UEs using small rechargeable and single coin cell batteries. Among vertical use cases, sensors and actuators are deployed extensively for monitoring, measuring, charging, etc. Generally, their batteries are not rechargeable and expected to last at least few years as described in 3GPP TR 38.875 (TR = Technical Report). Wearables include smart watches, rings, eHealth related devices, and medical monitoring devices. With typical battery capacity, it is challenging to sustain up to 1-2 weeks as required.

The power consumption depends on the configured length of wake-up periods, e.g., paging cycle. To meet the battery life requirements above, long eDRX cycle may be used, resulting in high latency, which is not suitable for such services with requirements of both long battery life and low latency. For example, in fire detection and extinguishment use case, fire shutters shall be closed and fire sprinklers shall be turned on by the actuators within 1 to 2 seconds from the time the fire is detected by sensors, long eDRX cycle cannot meet the delay requirements. eDRX is apparently not suitable for latency-critical use cases.

The Rel-18 study item for "Study on low-power wake up signal and receiver for NR" includes the following investigations:
- The low-power wake-up signal and receiver, including power saving benefit, coverage, system overhead impact, network energy impact and other related aspects.
- The receiver architecture for low-power wake-up receiver and provide analysis for power consumption, noise figure and etc.
- L1 design and procedure changes needed to support the low-power wake-up signal and evaluations for the link performances.
- Higher layer protocol changes needed to support the low-power wake-up signals.
- Related RAN4 impacts.

In RRC IDLE/INACTIVE modes, it is observed that significant UE power saving gain (up to more than 90%) is obtained by using LP-WUS/WUR to trigger UE MR paging monitoring compared with existing I-DRX operation (with and without PEI), if sufficient relaxation to MR RRM measurement is applied. Further, compared with existing eDRX operation, significant paging latency reduction and moderate UE power saving gain is observed, if LP-WUS monitoring and the corresponding paging monitoring after MR wake-up is performed not restricted within existing PTW of eDRX.

In RRC CONNECTED mode, it is observed that moderate UE power saving gain (up to more than 10%) is obtained with marginal impact to capacity by using LP-WUS/WUR to trigger UE MR PDCCH monitoring compared with existing UE power saving techniques, across different types of XR traffic and system load scenarios. It is also observed that significant UE power saving gain (up to more than 60%) and moderate User Perceived Throughput (UPT) improvement (up to more than 10%) is obtained for FTP and IM traffic, when the UE MR enters deep sleep state during LR LP-WUS monitoring. Furthermore, Rel-18 study verified the feasibility on serving cell RRM measurement offloading from UE MR to LP-WUR by reasonable evaluation methodology. RAN4 also identified some issues which could be further discussed in WI phase. Based on the SI outcome, it is proposed to specify LP-WUS/WUR in Rel-19.

However, waking-up the main receiver (MR) of the UE 110 still requires a significant amount of power and time. For example, the possible transition times for moving the MR from ultra-deep sleep were discussed, and values of 400ms and 800ms were considered. Hence, MR ramp-up time from ultra-deep sleep state can be quite long, e.g. 400ms or 800ms - but this may only be a lower limit and higher values for waking up the MR may be considered. The extent of the ramp-up time can depend on the MR complexity, i.e. it can be longer for more complicated devices, such as high-end smartphones, than for simpler devices e.g. IoT devices. The wake-up time can be reported by the UE 110 to the network 120, e.g., in UE capability.

Furthermore, the cost of waking up the MR can also be high in terms of power consumption. Based on the power consumption model, the ramp-up energy can be estimated to be high as 40000 units (e.g. for more complex smartphones) and even 15000 units for IoT type of devices. (Note: The assumed power model considers 100 units to correspond normal PDCCH deception). Because of this, reducing false paging activations, e.g., those, where UE 110 is triggered (since the group or sub-group, to which the UE belongs, is triggered) to monitor a configured paging occasion but there is no paging message for the UE 110, are beneficial to be reduced. Current solutions discussed do not provide flexibility for UEs 110 in idle or inactive state to determine whether paging monitoring can be skipped or not.

In summary, a relevant aspect for reducing power consumption for UEs 110 in idle and inactive mode operation, is the MR transition energy cost. Hence, if UE is repeatedly woken up by LP-WUS received, e.g., or a low-power receiver (LR), which indicates to monitor paging with MR, the power consumption benefits are negatively impacted. For example, in a paging escalation scenario, in which a paging message is first sent in a sub-set of cells and then repeated in larger number of cells, waking up the MR can result in increased power consumption due to false alarms resulting from consecutive LP-WUS triggering and MR activations. Also, RAN or AMF may repeat the paging for multiple cells.

In the case of LP-WUS based operation, there may also be ambiguity which exact PO the UE shall monitor after LP-WUS triggering. Namely, the UE could choose to monitor the first (closest) PO (of the UE 110) based on its MR transition delay or, if the wake-up delay is longer, the next (e.g. second) PO. A solution could be that the network knows the UE capability and sends the paging messages only based on the assumed delay and only once but this is complex for the network operation. Hence, the network may likely choose to repeat the PO multiple times.

In the solutions described herein, a network-based indication and/or configuration of the repetition is provided together with the corresponding functionality of the UE 110 to preserve power by omitting unnecessary PO monitoring based on the indication and/or configuration. A main aspect described herein is to enable the network, e.g., via a base station 120 (possibly in cooperation with other components of the network as shown in FIG. 1), to be able to indicate to the UE 110, whether the UE 110 can expect that the next paging message(s) is a repetition of the current (received) paging message. The UE 110 determines based on the indication that at least one subsequent paging message is the same paging message from UE's point of view. Based on the indication, the UE 110 may suspend paging reception for the next paging occasion, or an indicated number of paging occasions.

FIG. 4 is a general message flow diagram of paging monitoring enhancements according to the disclosure. A UE 110 in idle or inactive state is in communication with a base station (BS) 120. The BS 120 indicates (arrow 401) to the UE 110 that paging repetition is activated to enable the UE 110 to skip POs that are a repetition. This indication may be a paging repetition indication field comprised by a message associated with a paging message of a paging occasion (PO), e.g., associated with the paging message in PO that is shown with arrow 402. The message associated with the paging message may be the paging message itself (i.e., arrows 401 and 402 are effectively one arrow), a downlink control information (DCI) indicating the paging message, or a low-power wake-up signal message (LP-WUS) corresponding to the paging occasion of the paging message. The indication of arrow 401 may also be a paging repetition configuration, indicating a number of configured repetitions of a paging message, i.e., a total number of repetitions of any paging message that are currently sent. The field is generally understood as a part of the data structure of the message carrying the indication. For example, the field may be a part of a superordinate information element (IE) or also an IE itself.

The UE 110 may be paged, e.g., by an LP-WUS, and, thus, monitor the PO and receive the paging message (arrow 402). The UE 110 may then determine that the paging message is not addressed to itself, i.e., there is no paging record in the paging message for the UE 110. As the UE 110 is informed by the indication in arrow 401 that the paging message of arrow 402 is repeated and as the paging message 402 was not for the UE 110, the UE 110 is safe to skip one or more paging occasions according to the indication. How many subsequent paging occasions may be skipped may be explicitly defined by the indication or implicitly (as the number may be predefined and the indication may only state whether or not the respective message is repeated). It is noted that a repeated paging message in this disclosure may be a paging message that is identical (content and addressees) or at least identical with respect to the addressees, i.e. when the current paging message does not address the UE 110, repeated paging message will not address the UE 110 as well.

The BS 120 then broadcasts the repetitions of the paging message of arrow 402 as is shown with arrow 404 but the UE 110 could skip the monitoring, e.g., by not activating the MR for monitoring the PO(s) as explained above or by turning its receiver(s) into a low-power operation state while skipping the PO(s). After the indicated number of repetitions has been reached, the UE 110 again monitors the PO as shown with arrow 405 and, therefore, again activates its MR or the normal operation mode of the receiver(s). It is noted that in examples as considered herein, in which the UE 110 is informed about its paging by reception of an LP-WUS (i.e., the paging of its subgroup similar to what has been defined for PEI in Release 17 of 5G Standards), monitoring the PO (arrow 405) may be performed only if a respective LP-WUS is received (not shown in FIG. 4). Further details are given now with respect to FIGs. 5 to 11.

The flow chart of FIG. 5 is a flow chart of paging monitoring enhancement according to the disclosure. The method of FIG. 5 is described from the perspective of the UE 110, which is in idle or inactive state, but similar processes are performed by the BS 120 as is apparent to the skilled person and also described herein. Method processes described herein may generally reflect algorithms implemented in the respective devices and executed by one or more of their processor(s).

The method of FIG. 5 starts in box 501 with receiving a paging repetition configuration comprising a number of configured repetitions of a paging message. If the UE 110 determines that the paging message does not comprise a paging record for the UE (diamond 502), the method proceeds in box 503 with skipping monitoring of a number of subsequent paging occasions based on the paging repetition configuration. The number of subsequent paging occasion may even be zero, namely, if the paging repetition configuration indicates that paging messages are currently not repeated. Hence, if the BS 120 indicates to the UE 110 in the paging repetition configuration that paging messages are repeated, the UE 110 is not required to monitor paging of the subsequent paging occasions according to the paging repetition configuration. If the paging repetition configuration indicates that the paging messages are currently not repeated, the UE 110 would skip no POs and monitor its configured next PO.

In some embodiments, the method may also proceed with determining a current paging occasion position index. The paging occasion position index may be counted from the first subframe (SFN=0) and reflects how many configured POs for the UE 110 have passed until now. Alternatively, the UE 110 may determine the current paging occasion position index based on a received indication provided by the BS 120. For example, the BS 120 may indicate the current paging occasion index in a message received by the UE 110.

The UE 110 may, in such embodiments, determine the number of subsequent paging occasions based on the number of configured repetitions of a paging message and the current paging occasion position index. For example, it could for example be assumed that the number of configured repetitions is 4 transmissions of each paging message, meaning there is one first transmission and 3 repetitions of the same paging message. The current PO position index may be 6, i.e., the sixth PO configured for the UE 110. The UE 110 may then determine that the first paging message was sent in the first to fourth PO. The second paging message is, thus, sent in the fifth to eighth PO, meaning the sixth PO was the second transmission of the second paging message and two more repetitions will follow. If the current paging message does not address the UE 110, the UE 110 can determine that two subsequent paging messages will not comprise a paging record for the UE 110 and can skip monitoring the following two POs.

In some examples, the UE 110 may determine the number of subsequent paging occasions by subtracting the current paging occasion position index modulo the number of configured repetitions of a paging message from the number of configured repetitions of a paging message. Explained according to the above example, the UE 110 would calculate 4 - (6 mod 4) = 2 and skip monitoring of the next two POs. In related embodiments, the BS 120 may also indicate a starting index of the repetition. Then, the current paging occasion index is understood to be the index in view of the starting index of the repetition. For example, if the starting index is 3 in the above example, the current paging occasion index is 2 (4 - 3 + 1).

In some embodiments, the method may also comprise, in response to determining that the number of subsequent paging occasions has been reached, resuming monitoring a next paging occasion. This may, e.g., be the case if the UE 110 is informed in LP-WUS that its paging subgroup is paged and the UE 110 has determined that the next PO may be for itself.

In further examples, the paging repetition configuration may be received via a radio resource control message, configured via a system information message, or predefined. The system information message may be a system message for wake-up signal configuration or a system message for paging configuration.

In some embodiments, the method may further comprise skipping monitoring of one or more low-power wake-up signal messages corresponding to the subsequent paging occasions and/or one or more paging early indication messages corresponding to the subsequent paging occasions. This means, since the UE 110 knows whether or not it should monitor the next paging occasion(s) or whether it is not required to monitor those, the UE 110 can also skip the reception of corresponding LP-WUS and/or PEI. Thus, the UE 110 can also reduce the power needed for monitoring occasions for LP-WUS or PEI reception.

In some examples, the method may further comprise receiving a paging repetition indication field in a message associated with a paging message of a paging occasion, wherein the paging indication field indicates that the paging message is repeated according to the paging repetition configuration. The message associated with the paging message may be the paging message itself, a downlink control information indicating the paging message, or a low-power wake-up signal message corresponding to the paging occasion. Generally speaking, the paging repetition indication field may be defined as described below for FIG. 6.

FIG. 6 is a flow chart of paging monitoring enhancement with additional aspects according to the disclosure. In such embodiments, the UE also receives, as shown in box 601, a paging repetition indication field in a message associated with a paging message of a paging occasion. The paging indication field may indicate that the paging message is repeated according to the paging repetition configuration.

When the UE 110 then detects that a paging message is not for the UE 110 (diamond 602, which corresponds to diamond 502 of FIG. 5), the UE 110 determines based on the paging repetition indication field that paging occasions can be skipped as shown in box 603. It is noted that in embodiments, in which a paging repetition indication field and the paging repetition configuration are present, the paging repetition indication field is also considered for skipping monitoring of the number of subsequent paging occasions.

In embodiments, in which a paging repetition indication field is present as well, the message associated with the paging message may be the paging message itself, a downlink control information indicating the paging message, or a low-power wake-up signal message corresponding to the paging occasion.

When a corresponding paging repetition configuration indicates a number of configured repetitions as explained with FIG. 5, the paging repetition indication field may be a flag, which indicates whether or not the currently transmitted paging messages are repeated or not. Alternatively, the paging repetition indication field may indicate which repetition index the current paging message has, and the UE 110 can determine how many subsequent paging occasions can be skipped. For example, the number of configured repetitions may indicate 4, meaning there are 3 repetitions of the same paging message. The paging repetition indication field may indicate that the current paging message is number 3. Hence, the UE 110 will know that one (4 - 3 = 1) subsequent paging occasion can be skipped.

Although the embodiment of FIG. 6 is described as addition to the embodiment of FIG. 5, the paging repetition configuration can in other embodiments be omitted, which is still in line with FIG. 6. Such examples without paging repetition configuration are explained now also on the basis of FIG. 6.

The flow chart of FIG. 6 is again described from the perspective of the UE 110, which is in idle or inactive state, but similar processes are performed by the BS 120 as is apparent to the skilled person and also described herein. Method processes described herein may generally reflect algorithms implemented in the respective devices and executed by one or more of their processor(s).

The method of FIG. 6 starts in box 601 with receiving a paging repetition indication field in a message associated with a paging message of a paging occasion. If the UE 110 determines that the paging message does not comprise a paging record for the UE (diamond 602), the method proceeds in box 603 with skipping monitoring of a number of subsequent paging occasions based on the paging repetition indication field. The number of subsequent paging occasion may even be zero, namely, if the paging repetition indication field indicates that the paging message is not repeated. Hence, if the BS 120 indicates to the UE 110 in the paging repetition indication field that this received paging message is repeated, the UE 110 is not required to monitor paging of the indicated repeated subsequent paging occasions. If the paging repetition indication field indicates that the received paging message is not repeated, the UE 110 would skip no POs and monitor its configured next PO.

In some embodiments, the message associated with the paging message may be the paging message itself, a downlink control information indicating the paging message, or a low-power wake-up signal message corresponding to the paging occasion. For example, a UE 110 that monitors a PO and decodes the paging message of the PO may decode the paging repetition indication field in the paging message. Alternatively, the paging repetition indication field may be in the associated DCI of the paging message in the PO or may be comprised in the LP-WUS that indicated to the UE 110 to monitor the PO.

In some embodiments, the number of subsequent paging occasions may be identified in the paging repetition indication field. For example, the paging repetition indication field may be a 2 bit field, which can indicate any number between 0 (i.e., no repetition) and 3 (i.e., the following three paging messages are repetitions of this current paging message). The paging repetition indication field may also be interpreted to identify the number of occurrences, indicating (in the example of 2 bit) 1 to 4 transmissions of the same paging message in total. Hence, by receiving the paging repetition indication field, the UE 110 knows how many paging occasions can be skipped when the current paging message is not addressed to the UE 110. In a specific example, in which the paging repetition indication field is designed as small as possible, i.e., the paging repetition indication field is a flag (1 bit) and the number of subsequent paging occasions to be skipped is, thus, also one, if the flag is set, and zero, if the flag is not set.

In some embodiments, the method may further comprise receiving a paging repetition configuration enabling receiving and processing the paging repetition indication field by the UE 110. The paging repetition configuration may be received via a radio resource control message, via a system information message, or may be predefined. The system information message may be a system message for wake-up signal configuration or a system message for paging configuration. The paging repetition configuration may also comprise a number of configured repetitions of a paging message. This number of configured repetitions of a paging message may also serve for enabling receiving and processing the paging repetition indication field. This means, if the UE 110 detects the number of configured repetitions, the UE 110 knows that it can find the paging repetition indication field in a message associated with a PO. In such examples, in which there is a paging repetition indication field and a corresponding paging repetition configuration indicating a number of configured repetitions, the paging repetition indication field may also be a flag, which indicates whether or not the currently transmitted paging message(s) is/are repeated or not.

In some embodiments, the paging repetition configuration may be dedicated to types of UEs 110, e.g., UEs 110 that can support specific power saving strategies. For example, the paging repetition configuration may only be valid for UEs 110 that are equipped with a main receiver and a low-power receiver such that they can power-off the main receiver when they skip monitoring the PO(s). Additionally or alternatively, the paging repetition configuration may only apply if UEs 110 are in specific states or when specific conditions are fulfilled. Such conditions may define, e.g., one or more of that the UE 110 monitors LP-WUS for PO, the UE 110 monitors serving cell and/or neighboring cells with LP-SS or PSS/SSS, and the UE 110 is configured with an LP-WUS entry condition.

In further embodiments with indicating the number of configured repetitions by way of the configuration, the method may also comprise determining a current paging occasion position index. The paging occasion position index may be counted from the first subframe (SFN=0) and reflects how many configured repeated POs for the UE 110 have passed until the current point of time (current subframe of the received paging message). The method may also comprise determining the number of subsequent paging occasions based on the number of configured repetitions of a paging message and the current paging occasion position. In more detail, it could for example be assumed that the number of configured repetitions is 4 (i.e., 4 transmissions of each paging message). The current PO position index may be 6, i.e., the sixth PO configured for the UE 110 and the UE 110 monitors the sixth PO. In this example, the UE 110 did not successfully receive the fifth PO, e.g., because of reception quality issues, no connection, or the like. The UE 110 may then determine that a first paging message was sent in the first to fourth PO. The second paging message is, thus, sent in the fifth to eighth PO, meaning the sixth PO was the second transmission of the second paging message and two more repetitions will follow. If the current paging message in the sixth PO monitored by the UE 110 does not address the UE 110, the UE 110 can determine that two subsequent paging messages will not comprise a paging record for the UE 110 and can skip monitoring the following two POs.

In some embodiments, the method may further comprise skipping monitoring of one or more low-power wake-up signal messages corresponding to the subsequent paging occasions and/or one or more paging early indication messages corresponding to the subsequent paging occasions. This means, since the UE 110 knows whether or not it should monitor the next paging occasion(s) or whether it is not required to monitor those, the UE 110 can also skip the reception of corresponding LP-WUS and/or PEI. Thus, the UE 110 can also reduce the power needed for monitoring occasions for LP-WUS or PEI reception.

In some embodiments, the method may also comprise, in response to determining that the number of subsequent paging occasions has been reached, resuming monitoring a next paging occasion. This may, e.g., be the case if the UE 110 is informed in LP-WUS that its paging subgroup is paged and the UE 110 has determined that the next PO may be for itself.

FIG. 7 now illustrates behaviors of a user equipment 110 being equipped as receiver(s) 250 with a main receiver 751 and a low-power receiver 752. The main receiver (MR) 751 of the UE 110 can be in a sleep mode (or even powered-off) for power saving, which is shown on the left-hand side of FIG. 7. The low-power receiver (LR) 752 is monitoring for reception of a wake-up signal (WUS). While the LR 752 receives no WUS or if the LR 752 receives a WUS which indicates no need of activating the MR 751, the MR 751 can stay in the sleep mode (also denoted as sleep state) or stay powered-off as is shown on the left-hand side of FIG. 7.

The MR 751 may be activated only upon the reception of the WUS from the network, which indicates that the MR 751 is required to be active, e.g., paged. The LR 752 may then trigger the MR 751 to be powered-on or be waken up as is shown in the middle of FIG. 7. Basically, the network may trigger the UE 110 to (fully) wake-up exactly when needed in an event-driven manner, by transmitting a special wake-up signal, the WUS, to the UE 110, which is monitored by the dedicated LR 752 at the UE 110. When a UE 110 receives the WUS, the WUS receiver (i.e., LR 752) can trigger the wake-up of the ordinary NR transceiver (i.e. MR 751) and communication can start as usual. Thus, the LR 752 wakes up the MR 751, otherwise, the MR 751 can be kept powered-off or in a sleep mode. However, as already indicated above, it may happen that the UE 110 is paged but no paging record in the paging message is addressed to the UE 110. When this paging message is further repeated, e.g., because some UEs 110 in a same paging group still need to receive the paging message, the UE 110 is still paged (i.e., WUS = ON) and the MR 751 would always be triggered to change to active mode.

In the herein described embodiments, this behavior is changed, which is shown on the right-hand side of FIG. 7. The UE 110, in particular, its LR 752 receives a WUS indicating that the MR 751 should wake up, e.g., the UE 110 (or, in particular, its group or subgroup) is paged and would normally now wake the MR 751 up. However, the LR 752 or any other component of the UE 110 supporting the LR 752 is aware of the repetition of the paging message (e.g., because a paging repetition indication field and/or a paging repetition configuration was received). With this information, the LR 752 may not wake up the MR 751 and the MR 751 can stay off or in sleep mode. It is noted that sleep state and sleep mode are synonyms and that powering-off may also comprise the transition to a sleep state. The same is true for active state/mode and powering-on.

The LR 752 may be operated in an always 'on', i.e., active manner with low power consumption. The LR 752 consumes significantly less power compared to the MR 751 because of using a simple, lightweight WUS. The use of dedicated hardware for monitoring the WUS, i.e., the LR 752, which may only able to receive the WUS, makes the power-saving possible. Furthermore, the LR 752 may also have further capabilities, e.g., serving cell evaluations could be offloaded from MR 751 to LR 752 to enable significant power saving. The LR 752 could carry the serving cell evaluation related measurements based on new reference signal, low power synchronization signal (LP-SS), or SSB depending on the LR type. Only serving cell evaluations may be offloaded to the LR 752 as the coverage of the low power signals and receiver is limited (LR 752 may only have 1 RX and higher noise figure).

Different LR types have been considered by 3GPP meeting groups, mainly envelope detectors (ED) and sequence detectors (SD). For the ED LR 752, the LR 752 is only capable of detecting a trigger for turning the MR 751 of or off. The LR 752 has no IQ branch to perform coherent/sequence detection. This LR 752 can only receive LP-WUS and LP-SS. For the SD LR 752, the LR 752 uses IQ-branches to perform coherent/sequence detection. The LR 752 consumes more power due to the better accuracy of crystal oscillators (XO) used to drive the phase-locked loop. This type of LR 752 can receive also SSB in addition to LP-WUS.

### Message flow diagrams of specific illustrative examples

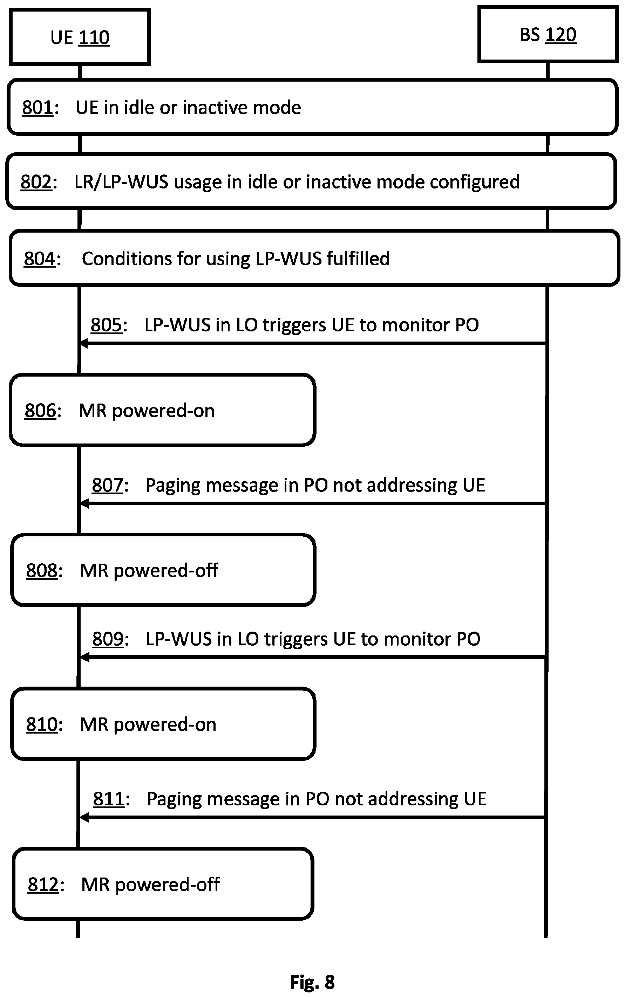

FIG. 8 shows a message flow diagram of paging monitoring with a user equipment being equipped with a low-power receiver (LR) 752 and a main receiver (MR) 751 if no paging monitoring enhancement is applied. The UE 110 is in idle or inactive mode in connection with BS 120 as is indicated in box 801. Moreover, a low-power receiver (LR) usage and/or usage of a low-power wake-up signal (LP-WUS) is configured as indicated in box 802, e.g., by indicating in system information that such usage of LR and/or LP-WUS is supported. Finally, conditions for using LP-WUS may also be configured as is shown with box 804, which may define, e.g., one or more of that the UE 110 monitors LP-WUS for PO, the UE 110 monitors serving cell and/or neighboring cells with LP-SS or PSS/SSS, and the UE 110 is configured with an LP-WUS entry condition. In consequence, the UE 110 monitors LOs for receiving LP-WUS and has its MR 751 powered-off.

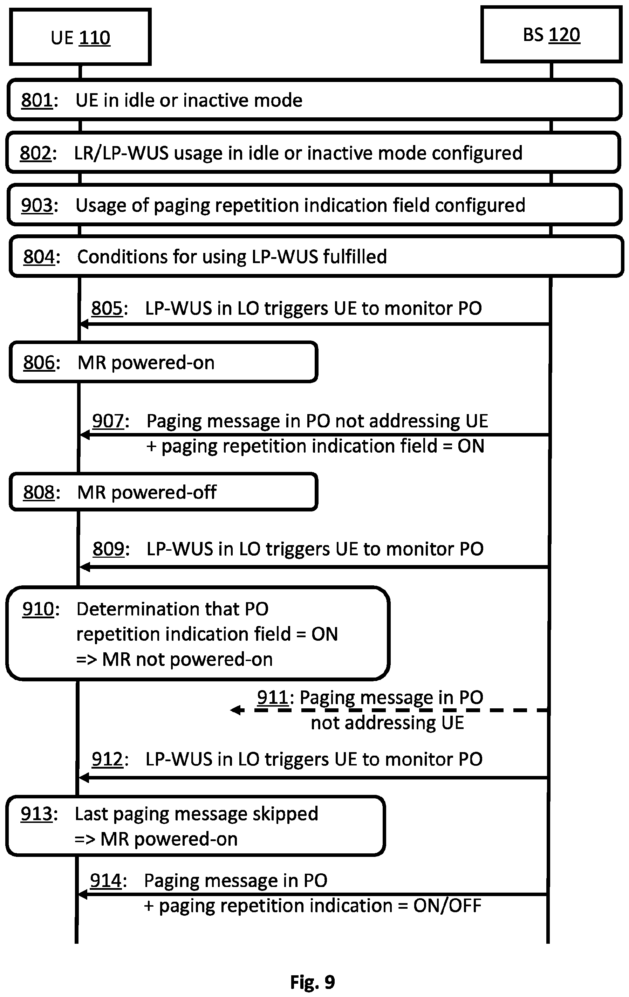

With arrow 805, the UE 110 receives an LP-WUS in an LO with its LR 752 that triggers the UE 10 to monitor the next configured PO to which the LO is associated. The UE 110, thus, powers-on its MR 751 as is indicated in box 806. The UE 110 monitors its PO and receives the paging message, which is decoded, and determines that the paging message does not address the UE 110 as is shown with arrow 807. Thus, the UE 110 powers-off its MR 751 as is indicated in box 808. This procedure is repeated with arrows and boxes 809 to 811 for the next LO and next PO although the paging message in the next PO (arrow 811) is a repetition of paging message (arrow 807) and could have been skipped. The MR 751 is, thus, powered-on unnecessarily. This is improved according to the solutions described herein for which specific illustrative examples are shown in the following FIGs. 9 to 11.

FIG. 9 shows a message flow diagram of a paging monitoring enhancement with predefined skipping of one paging occasion. The configuration is similar to the example of FIG. 8 and the boxes 801, 802, and 804 are also present. Additionally, the UE 110 may receive a configuration that enables reception and processing of a paging repetition indication field as is shown in box 903. This configuration corresponds to the herein discussed paging repetition configuration.

Moreover, also the beginning of the message flow is similar. The UE 110 receives the LP-WUS (box 805) and powers-on its MR 751 (box 806). The UE 110 also receives the paging message in the corresponding PO, which in this example further comprises a paging repetition indication field that is a flag and indicates whether or not this paging message will be repeated in the next PO. As is shown with arrow 907, the paging message indicates that it will be repeated ("ON"). The MR 751 is powered-off as usual (box 808) but it is not powered-on again although the next LP-WUS (arrow 809) indicates that the UE 110 is paged (e.g., because its subgroup is paged as explained above) since the UE 110 determines that the subsequent paging message, i.e., that one for which the LP-WUS of arrow 809 triggers the UE 110, is a repetition and will not be relevant to the UE 110. This is indicated in box 910. It is noted that the order of arrows/boxes 809 and 910 is not important. Hence, the UE 110 may also determine when powering the MR 751 off in box 808 that it will not power it on when receiving the next LP-WUS of arrow 809.

The BS 120 still regularly transmits the next paging message as is shown with arrow 911. This paging message also comprises the paging repetition indication field (although not shown as the UE 110 will not be aware of it). However, for illustrative purposes, it is noted that the paging repetition indication field will indicate "OFF" if the next PO does not comprise a repetition of this paging message and will indicate "ON" if the next PO is another repetition because other UEs 110 of the same subgroup still need to read the paging message.

The UE 110 then receives the next LP-WUS with arrow 912, which again triggers the UE 110. Since the UE 110 now does not know whether or not the next PO will comprise a paging message for itself as the last paging message was skipped, it will power-on its MR 751 (box 913) and receive the subsequent paging message as is shown with arrow 914. This paging message could then comprise a paging record for the UE 110 but also again no paging record for the UE 110. In the latter case, the UE 110 will determine again based on the paging repetition indication field, whether or not to skip the subsequent paging message as explained.

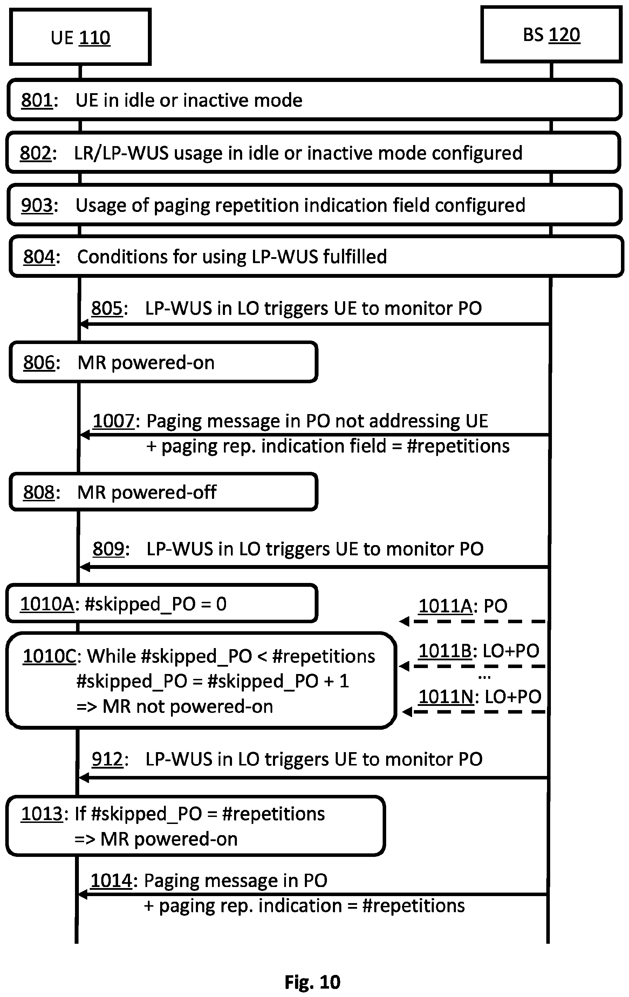

FIG. 10 shows another message flow diagram of a paging monitoring enhancement but now with an explicit field for skipping a flexible number of paging occasions. The arrows and boxes 801, 802, 903, 804, 805, and 806 are identical to the ones of FIG. 9. In this example, however, the paging repetition field is not a flag but may indicate the remaining number of repetitions (arrow 1007). Of course, a flag is also an indication of the remaining number of repetitions but only with a maximum number of 1. Therefore, FIG. 9 is a specific example of FIG. 10, which requires less bits in the paging message (or any other associated message as was explained above) but provides less flexibility.

The MR 751 is powered-off as usual (box 808) but it is not powered-on again although the next LP-WUS (arrow 809) indicates that the UE 110 is paged (e.g., because its subgroup is paged as explained above) since the UE 110 determines that the subsequent paging message, i.e., that one for which the LP-WUS of arrow 809 triggers the UE 110, is a repetition and will not be relevant to the UE 110. This is indicated in boxes 1010A and 1010C. The UE 110 may initialize a counter for the number of skipped POs (box 1010A). The UE 110 may then count the number of POs in the number of skipped POs and, while the number of skipped POs is smaller than the remaining number of repetitions as indicate in paging message of arrow 1007, the MR 751 is kept in power-off state (box 1010C).

The BS 120 still regularly transmits the paging messages in the next POs (arrow 1011A) and the LP-WUS in the subsequent LOs and the paging messages in the subsequent POs as is shown with arrows 1011B to 1011N. The UE 110 thus ignores the indication in LP-WUS (the LR 752 may even go into a low-power state as has been described above). It is noted that the order of arrows/boxes 809, 1010A-C, and 1011A-N is not important. Hence, the UE 110 may also determine when powering the MR 751 off in box 808 that it will not power it on when receiving the subsequent number of LP-WUS (as indicated in arrows 809, 8011B, ..., 1011N). When the number of skipped POs is equal to the number of remaining repetitions (which is the case when the last repeated POs has passed), the MR 751 is - in response to receiving a respective LP-WUs in LO, which triggers the UE 110 (shown in arrow 912), powered-on again as is indicated in box 1013. The next paging message in the corresponding PO is received (arrow 1014) and the processes may be repeated as described before.

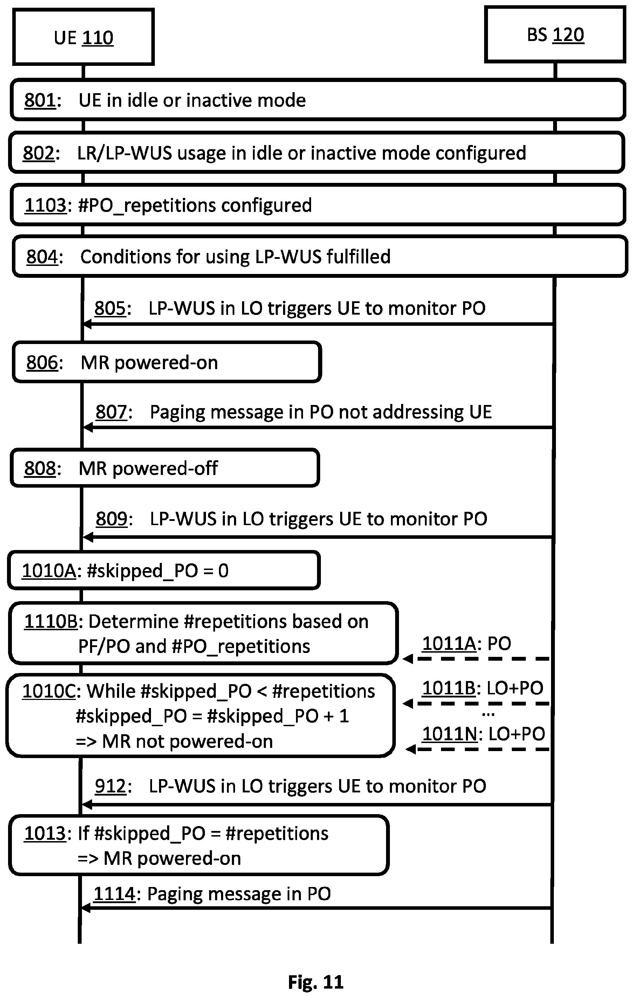

FIG. 11 finally shows a message flow diagram without the need of an explicit field in a paging message. The arrows and boxes 801, 802, 804, 805, 806, 807, 808, and 809 are identical to the ones of FIG. 8. The only difference to this point is that the UE 110 is configured with a number of configured repetitions ("#PO_repetitions") in box 1103. This number informs the UE about the repeating pattern of paging messages as has been explained above. Moreover, when the UE 110 has received the paging message in arrow 807 that was not addressed to itself, it also sets a counter of skipped paging occasions as was explained with respect to FIG. 10 (box 1010A).

The difference to FIG. 10 is that the UE 110 is not informed about the number of remaining repetitions in the paging message but calculates this based on the information of box 1103 and the position index of the received paging message (arrow 807) with respect to a paging frame (PF) and the respective paging occasion (PO), which is indicated in box 1110B. Examples of this determination have been given above when discussing FIGs. 4 to 6.

The following processes are again similar as described for the FIGs. 9 and 10 as can be seen from the reference signs of the boxes/arrows 1010C, 912, and 1013 and the net received paging message (arrow 1114) has again a similar structure as, e.g., paging message 807, i.e., no additional field is necessary. It is noted that again the order of arrows/boxes 809, 1010A, 1110B, 1010C, and 1011A-N is not important as will be apparent to the person skilled in the art. As in the examples before, the UE 110 may directly determine right when powering-off its MR 751 in box 808 the number of remaining repetitions in box 1110B and initialize the counter in box 1010A or the like.

A further development of FIG. 11 may be that the paging messages (e.g., those shown with arrows 807, 1011A-N, 1114) comprise a field indicating which repetition index the current paging message has and the UE 110 can determine how many subsequent paging occasions can be skipped based on the number of configured repetitions as has been explained above. In such examples, the determination of the position index (box 1110B) of the currently received paging message may not be necessary.

The herein described procedures may be applied per model or per functionality level (identified by an identifier) or across models or functionalities of a given entity, e.g., as a UE feature. It should be understood that the apparatuses described herein may comprise or be coupled to other units or modules etc., such as radio parts or radio heads, used in or for transmission and/or reception. Although the apparatuses have been described as one entity, different modules and memory may be implemented in one or more physical or logical entities.

It is noted that whilst embodiments have been described in relation to LTE and 5G NR, similar principles may be applied in relation to other networks and communication systems where enforcing fast connection re-establishment is required. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes exemplary embodiments, there are several variations and modifications which may be made to the disclosed solution without departing from the scope of the subject disclosure.

In general, the various exemplary embodiments may be implemented in hardware or special purpose circuits, software, logic or any combination thereof. Some aspects of the subject disclosure may be implemented in hardware, while other aspects may be implemented in firmware or software which may be executed by a controller, microprocessor or other computing device, although the subject disclosure is not limited thereto. While various aspects of the subject disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

Example embodiments of the subject disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the figures may represent program processes, or interconnected logic circuits, blocks and functions, or a combination of program processes and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may comprise one or more of general-purpose computers, special purpose computers, microprocessors, digital signal processors (DSPs), application specific integrated circuits (ASICs), FPGA, gate level circuits and processors based on multicore processor architecture, as non-limiting examples.

Example embodiments of the subject disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Moreover, in accordance with the foregoing description, the following four sets of clauses reflect possible embodiments of the herein presented solution, which are further combinable between the sets of clauses. These clauses do not define the scope, which is solely defined by the appended claims.

### First set of clauses:

1. A method for monitoring paging occasions, the method being performed by a user equipment in idle state or inactive state and comprising:
   - receiving a paging repetition indication field in a message associated with a paging message of a paging occasion; and
   - in response to determining that the paging message does not comprise a paging record for the user equipment, skipping monitoring of a number of subsequent paging occasions based on the paging repetition indication field.
2. The method of clause 1, wherein the message associated with the paging message is the paging message itself, a downlink control information indicating the paging message, or a low-power wake-up signal message corresponding to the paging occasion.
3. The method of clause 1 or clause 2 further comprising receiving a paging repetition configuration enabling receiving and processing the paging repetition indication field by the user equipment.
4. The method of clause 3, wherein the paging repetition configuration is received via a radio resource control message, via a system information message, or predefined.
5. The method of any one of clauses 1 to 4, wherein the number of subsequent paging occasions is identified in the paging repetition indication field.
6. The method of clause 5, wherein the paging repetition indication field is a flag and the number of subsequent paging occasions is one.
7. The method of clause 3 or clause 4, wherein the paging repetition configuration further comprises a number of configured repetitions of a paging message.
8. The method of clause 7 further comprising determining a current paging occasion position index and determining the number of subsequent paging occasions based on the number of configured repetitions of a paging message and the current paging occasion position index.
9. The method of any one of clauses 1 to 8 further comprising skipping monitoring of one or more low-power wake-up signal messages corresponding to the subsequent paging occasions and/or one or more paging early indication messages corresponding to the subsequent paging occasions.
10. The method of any one of clauses 1 to 9 further comprising, in response to determining that the number of subsequent paging occasions has been reached, resuming monitoring a next paging occasion.
11. A user equipment for monitoring paging occasions comprising:
   at least one memory; and
   at least one processor;
   wherein the at least one processor is configured to, when the user equipment is in idle state or inactive state:
   - receive a paging repetition indication field in a message associated with a paging message of a paging occasion; and
   - in response to determining that the paging message does not comprise a paging record for the user equipment, skip monitoring of a number of subsequent paging occasions based on the paging repetition indication field.
12. The user equipment of clause 11, wherein the message associated with the paging message is the paging message itself, a downlink control information indicating the paging message, or a low-power wake-up signal message corresponding to the paging occasion.
13. The user equipment of clause 11 or clause 12, wherein the at least one processor is further configured to receive a paging repetition configuration enabling receiving and processing the paging repetition indication field by the user equipment.
14. The user equipment of clause 13, wherein the paging repetition configuration is received via a radio resource control message, via a system information message, or predefined.
15. The user equipment of any one of clauses 11 to 14, wherein the number of subsequent paging occasions is identified in the paging repetition indication field.
16. The user equipment of clause 15, wherein the paging repetition indication field is a flag and the number of subsequent paging occasions is one.
17. The user equipment of clause 13 or clause 14, wherein the paging repetition configuration further comprises a number of configured repetitions of a paging message.
18. The user equipment of clause 18, wherein the at least one processor is further configured to determine a current paging occasion position index and determine the number of subsequent paging occasions based on the number of configured repetitions of a paging message and the current paging occasion position index.
19. The user equipment of any one of clauses 11 to 18, wherein the at least one processor is further configured to skip monitoring of one or more low-power wake-up signal messages corresponding to the subsequent paging occasions and/or one or more paging early indication messages corresponding to the subsequent paging occasions.
20. The user equipment of any one of clauses 11 to 19, wherein the at least one processor is further configured to, in response to determining that the number of subsequent paging occasions has been reached, resume monitoring a next paging occasion.
21. A method for supporting monitoring of paging occasions, the method being performed by a base station and comprising:
   - transmitting a paging repetition indication field in a message associated with a paging message of a paging occasion; and
   wherein the paging repetition indication field indicates that a user equipment in idle state or inactive state is allowed to skip monitoring, in response to determining that the paging message does not comprise a paging record for the user equipment, of a number of subsequent paging occasions based on the paging repetition indication field.
22. The method of clause 21, wherein the message associated with the paging message is the paging message itself, a downlink control information indicating the paging message, or a low-power wake-up signal message corresponding to the paging occasion.
23. The method of clause 21 or clause 22 further comprising transmitting a paging repetition configuration enabling receiving and processing the paging repetition indication field by the user equipment.
24. The method of clause 23, wherein the paging repetition configuration is transmitted via a radio resource control message, via a system information message, or predefined.
25. The method of any one of clauses 21 to 24, wherein the number of subsequent paging occasions is identified in the paging repetition indication field.
26. The method of clause 25, wherein the paging repetition indication field is a flag and the number of subsequent paging occasions is one.
27. The method of clause 23 or clause 42, wherein the paging repetition configuration further comprises a number of configured repetitions of a paging message.
28. The method of any one of clauses 21 to 27, wherein the paging repetition indication field further indicates that the user equipment in idle state or inactive state is allowed to skip monitoring of one or more low-power wake-up signal messages corresponding to the subsequent paging occasions and/or one or more paging early indication messages corresponding to the subsequent paging occasions.
29. The method of any one of clauses 21 to 28 further comprising receiving the paging repetition indication from an access and mobility management function.
30. The method of any one of clauses 21 to 28 further comprising generating the paging repetition indication at the base station.
31. A base station for supporting monitoring of paging occasions comprising:
   at least one memory; and
   at least one processor;

   wherein the at least one processor is configured to:
      - transmit a paging repetition indication field in a message associated with a paging message of a paging occasion;
   wherein the paging repetition indication field indicates that a user equipment in idle state or inactive state is allowed to skip monitoring, in response to determining that the paging message does not comprise a paging record for the user equipment, of a number of subsequent paging occasions based on the paging repetition indication field.
32. The base station of clause 31, wherein the message associated with the paging message is the paging message itself, a downlink control information indicating the paging message, or a low-power wake-up signal message corresponding to the paging occasion.
33. The base station of clause 31 or clause 32, wherein the at least one processor is further configured to transmit a paging repetition configuration enabling receiving and processing the paging repetition indication field by the user equipment.
34. The base station of clause 33, wherein the paging repetition configuration is transmitted via a radio resource control message, via a system information message, or predefined.
35. The base station of any one of clauses 31 to 34, wherein the number of subsequent paging occasions is identified in the paging repetition indication field.
36. The base station of clause 35, wherein the paging repetition indication field is a flag and the number of subsequent paging occasions is one.
37. The base station of clause 33 or clause 34, wherein the paging repetition configuration further comprises a number of configured repetitions of a paging message.
38. The base station of any one of clauses 31 to 37, wherein the paging repetition indication field further indicates that the user equipment in idle state or inactive state is allowed to skip monitoring of one or more low-power wake-up signal messages corresponding to the subsequent paging occasions and/or one or more paging early indication messages corresponding to the subsequent paging occasions.
39. The base station of any one of clauses 31 to 38 further comprising receiving the paging repetition indication from an access and mobility management function.
40. The base station of any one of clauses 31 to 38 further comprising generating the paging repetition indication at the base station.

### Second set of clauses:

1. A method for monitoring paging occasions, the method being performed by a user equipment in idle state or inactive state and comprising:
   - receiving a paging repetition configuration comprising a number of configured repetitions of a paging message; and
   - in response to determining that the paging message does not comprise a paging record for the user equipment, skipping monitoring of a number of subsequent paging occasions based on the paging repetition configuration.
2. The method of clause 1 further comprising determining a current paging occasion position index and determining the number of subsequent paging occasions based on the number of configured repetitions of a paging message and the current paging occasion position index.
3. The method of clause 2, wherein the number of subsequent paging occasions to be skipped is determined by subtracting the current paging occasion position index modulo the number of configured repetitions of a paging message from the number of configured repetitions of a paging message.
4. The method of any one of clauses 1 to 3 further comprising, in response to determining that the number of subsequent paging occasions has been reached, resuming monitoring a next paging occasion.
5. The method of any one of clauses 1 to 4, wherein the paging repetition configuration is received via a radio resource control message, configured via a system information message, or predefined.
6. The method of any one of clauses 1 to 5 further comprising skipping monitoring of one or more low-power wake-up signal messages corresponding to the subsequent paging occasions and/or one or more paging early indication messages corresponding to the subsequent paging occasions.
7. The method of any one of clauses 1 to 6 further comprising receiving a paging repetition indication field in a message associated with a paging message of a paging occasion, wherein the paging indication field indicates that the paging message is repeated according to the paging repetition configuration.
8. The method of clause 7, wherein the message associated with the paging message is the paging message itself, a downlink control information indicating the paging message, or a low-power wake-up signal message corresponding to the paging occasion.
9. A user equipment for monitoring paging occasions comprising:
   at least one memory; and
   at least one processor;
   wherein the at least one processor is configured to, when the user equipment is in idle state or inactive state execute the method according to any one of clauses 1 to 8.
10. A method for supporting monitoring of paging occasions, the method being performed by a base station and comprising:
   - transmitting a paging repetition configuration comprising a number of configured repetitions of a paging message; and
   wherein the paging repetition configuration indicates that a user equipment in idle state or inactive state is allowed to skip monitoring, in response to determining that the paging message does not comprise a paging record for the user equipment, of a number of subsequent paging occasions based on the paging repetition configuration.
11. The method of clause 10, wherein the paging repetition configuration further indicates that the user equipment in idle state or inactive state is allowed, in response to determining that the number of subsequent paging occasions has been reached, to resume monitoring a next paging occasion.
12. The method of clause 10 or clause 11, wherein the paging repetition configuration is received via a radio resource control message, configured via a system information message, or predefined.
13. The method of any one of clauses 10 to 12, wherein the paging repetition configuration further indicates that a user equipment in idle state or inactive state is allowed to skip monitoring, in response to determining that the paging message does not comprise a paging record for the user equipment, of one or more low-power wake-up signal messages corresponding to the subsequent paging occasions and/or one or more paging early indication messages corresponding to the subsequent paging occasions.
14. The method of any one of clauses 10 to 13 further comprises transmitting a paging repetition indication field in a message associated with a paging message of a paging occasion, wherein the paging indication field indicates that the paging message is repeated according to the paging repetition configuration.
15. The method of clause 14, wherein the message associated with the paging message is the paging message itself, a downlink control information indicating the paging message, or a low-power wake-up signal message corresponding to the paging occasion.
16. A base station for supporting monitoring of paging occasions comprising:
   at least one memory; and
   at least one processor;
   wherein the at least one processor is configured to execute the method according to any one of clauses 10 to 15.

### Third set of clauses:

1. A method for monitoring paging occasions, the method being performed by a user equipment in idle state or inactive state and comprising:
   - receiving a paging repetition indication field in a message associated with a paging message of a paging occasion;
   - in response to determining that the paging message does not comprise a paging record for the user equipment, skipping monitoring of a number of subsequent paging occasions based on the paging repetition indication field; and
   - in response to determining that the number of subsequent paging occasions has been reached, resuming monitoring a next paging occasion.
2. The method of clause 1, wherein the message associated with the paging message is the paging message itself, a downlink control information indicating the paging message, or a low-power wake-up signal message corresponding to the paging occasion.
3. The method of clause 1, wherein the number of subsequent paging occasions is identified in the paging repetition indication field.
4. The method of clause 1, wherein the paging repetition indication field is a flag and the number of subsequent paging occasions is one.
5. The method of clause 1 further comprising receiving a paging repetition configuration enabling receiving and processing the paging repetition indication field by the user equipment, wherein the paging repetition configuration is received via a radio resource control message, via a system information message, or predefined.
6. The method of clause 5, wherein the paging repetition configuration further comprises a number of configured repetitions of a paging message.
7. The method of clause 6 further comprising determining a current paging occasion position index in a current paging frame and determining the number of subsequent paging occasions based on the number of repeated paging occasions and the current paging occasion position index.
8. The method of clause 1 further comprising skipping monitoring of one or more low-power wake-up signal messages corresponding to the subsequent paging occasions and/or one or more paging early indication messages corresponding to the subsequent paging occasions.
9. A user equipment for monitoring paging occasions comprising:
   at least one memory; and
   at least one processor;
   wherein the at least one processor is configured to, when the user equipment is in idle state or inactive state:
   - receive a paging repetition indication field in a message associated with a paging message of a paging occasion;
   - in response to determining that the paging message does not comprise a paging record for the user equipment, skip monitoring of a number of subsequent paging occasions based on the paging repetition indication field; and
   - in response to determining that the number of subsequent paging occasions has been reached, resume monitoring a next paging occasion.
10. The user equipment of clause 9, wherein the message associated with the paging message is the paging message itself, a downlink control information indicating the paging message, or a low-power wake-up signal message corresponding to the paging occasion.
11. The user equipment of clause 9, wherein the number of subsequent paging occasions is identified in the paging repetition indication field.
12. The user equipment of clause 9, wherein the paging repetition indication field is a flag and the number of subsequent paging occasions is one.
13. The user equipment of clause 9, wherein the at least one processor is further configured to receive a paging repetition configuration enabling receiving and processing the paging repetition indication field by the user equipment, wherein the paging repetition configuration is received via a radio resource control message, via a system information message, or predefined.
14. The user equipment of clause 13, wherein the paging repetition configuration further comprises a number of configured repetitions of a paging message.
15. The user equipment of clause 14, wherein the at least one processor is further configured to determine a current paging occasion position index in a current paging frame and determine the number of subsequent paging occasions based on the number of repeated paging occasions and the current paging occasion position index.
16. The user equipment of clause 9, wherein the at least one processor is further configured to skip monitoring of one or more low-power wake-up signal messages corresponding to the subsequent paging occasions and/or one or more paging early indication messages corresponding to the subsequent paging occasions.
17. A method for supporting monitoring of paging occasions, the method being performed by a base station and comprising:
   - transmitting a paging repetition indication field in a message associated with a paging message of a paging occasion;
   wherein the paging repetition indication field indicates that a user equipment in idle state or inactive state is allowed to skip monitoring, in response to determining that the paging message does not comprise a paging record for the user equipment, of a number of subsequent paging occasions based on the paging repetition indication field and, in response to determining that the number of subsequent paging occasions has been reached, to resume monitoring a next paging occasion.
18. The method of clause 17, wherein the message associated with the paging message is the paging message itself, a downlink control information indicating the paging message, or a low-power wake-up signal message corresponding to the paging occasion.
19. The method of clause 17, wherein the number of subsequent paging occasions is identified in the paging repetition indication field.
20. The method of clause 17, wherein the paging repetition indication field is a flag and the number of subsequent paging occasions is one.
21. The method of clause 17 further comprising transmitting a paging repetition configuration enabling receiving and processing the paging repetition indication field by the user equipment, wherein the paging repetition configuration is transmitted via a radio resource control message, via a system information message, or predefined.
22. The method of clause 21, wherein the paging repetition configuration further comprises a number of configured repetitions of a paging message.
23. A base station for supporting monitoring of paging occasions comprising:
   at least one memory; and
   at least one processor;

   wherein the at least one processor is configured to:
      - transmit a paging repetition indication field in a message associated with a paging message of a paging occasion;
   wherein the paging repetition indication field indicates that a user equipment in idle state or inactive state is allowed to skip monitoring, in response to determining that the paging message does not comprise a paging record for the user equipment, of a number of subsequent paging occasions based on the paging repetition indication field and, in response to determining that the number of subsequent paging occasions has been reached, to resume monitoring a next paging occasion.
24. The base station of clause 23, wherein the message associated with the paging message is the paging message itself, a downlink control information indicating the paging message, or a low-power wake-up signal message corresponding to the paging occasion.
25. The base station of clause 23, wherein the number of subsequent paging occasions is identified in the paging repetition indication field.
26. The base station of clause 23, wherein the paging repetition indication field is a flag and the number of subsequent paging occasions is one.
27. The base station of clause 23, wherein the at least one processor is further configured to transmit paging repetition configuration enabling receiving and processing the paging repetition indication field by the user equipment, wherein the paging repetition configuration is transmitted via a radio resource control message, via a system information message, or predefined.
28. The base station of clause 27, wherein the paging repetition configuration further comprises a number of configured repetitions of a paging message.

### Fourth set of clauses:

1. A method for monitoring paging occasions, the method being performed by a user equipment in idle state or inactive state, the method comprising:
   - receiving a paging repetition indication field in a message associated with a paging message of a paging occasion; and
   - in response to determining that the paging message does not comprise a paging record for the user equipment, activating a low-power operation state in the user equipment for skipping monitoring of a number of subsequent paging occasions based on the paging repetition indication field.
2. The method of clause 1 further comprising, in response to determining that the number of subsequent paging occasions has been reached, activating an active monitoring state in the user equipment for monitoring a next paging occasion.
3. The method of clause 2, wherein activating an active monitoring state is based on a reception of a trigger, wherein the trigger for monitoring the next paging occasion is received via a corresponding low-power wake-up signal.
4. The method of any one of clauses 1 to 3 further comprising modifying timing of measurements to be performed while the user equipment is in low-power operation state.
5. The method of any one of clauses 1 to 4 further comprising, in response to receiving the paging repetition indication before activating the low-power operation state, performing extra measurements.
6. The method of clause 5, wherein a number and/or type of extra measurements are determined based on the number of subsequent paging occasions to be skipped.
7. The method of any one of clauses 1 to 6, wherein the user equipment is equipped with a low-power receiver and a main receiver.
8. The method of clause 7, wherein activating a low-power operation state in the user equipment comprises activating a sleep state of the main receiver.
9. The method of clause 8 further comprising activating a low-power state of the low-power receiver for skipping monitoring of low-power wake-up signal messages corresponding to the subsequent paging occasions.
10. The method of clause 9 further comprising modifying timing of synchronization signal measurements to be performed using the low-power receiver while the low-power receiver is in the low-power state.
11. The method of clause 10 further comprising, in response to receiving the paging repetition indication before activating the low-power state of the low-power receiver, performing extra synchronization signal measurements using the low-power receiver.
12. The method of any one of clauses 1 to 11 further comprising counting each upcoming paging occasion in a repetition counter, wherein determining that the number of subsequent paging occasions has been reached comprises determining that the repetition counter has reached the number of subsequent paging occasions.
13. The method of any one of clauses 1 to 12, wherein the message associated with the paging message is the paging message itself, a downlink control information indicating the paging message, or a low-power wake-up signal message corresponding to the paging occasion.
14. The method of any one of clauses 1 to 13, wherein the number of subsequent paging occasions is identified in the paging repetition indication field.
15. The method of clause 14, wherein the paging repetition indication field is a flag and the number of subsequent paging occasions is one.
16. The method of any one of clauses 1 to 15 further comprising receiving a paging repetition configuration enabling receiving and processing the paging repetition indication field by the user equipment.
17. The method of clause 16, wherein the paging repetition configuration further comprises a number of configured repetitions of a paging message, wherein the method further comprises determining a current paging occasion position index and determining the number of subsequent paging occasions based on the number of configured repetitions and the current paging occasion position index.
18. A user equipment for monitoring paging occasions comprising:
   at least one memory; and
   at least one processor;
   wherein the at least one processor is configured to, when the user equipment is in idle state or inactive state:
   - receive a paging repetition indication field in a message associated with a paging message of a paging occasion; and
   - in response to determining that the paging message does not comprise a paging record for the user equipment, activate a low-power operation state in the user equipment for skipping monitoring of a number of subsequent paging occasions based on the paging repetition indication field.
19. The user equipment of clause 18, wherein the at least one processor is further configured to, in response to determining that the number of subsequent paging occasions has been reached, activate an active monitoring state in the user equipment for monitoring a next paging occasion.
20. The user equipment of clause 18 or clause 19, wherein activating an active monitoring state is based on a reception of a trigger, wherein the trigger for monitoring the next paging occasion is received via a corresponding low-power wake-up signal.
21. The user equipment of any one of clauses 18 to 20, wherein the at least one processor is further configured to modify timing of measurements to be performed while the user equipment is in low-power operation state.
22. The user equipment of any one of clauses 18 to 21, wherein the at least one processor is further configured to, in response to receiving the paging repetition indication before activating the low-power operation state, perform extra measurements.
23. The user equipment of clause 22, wherein a number and/or type of extra measurements are determined based on the number of subsequent paging occasions to be skipped.
24. The method of any one of clauses 18 to 23, wherein the user equipment is equipped with a low-power receiver and a main receiver.
25. The user equipment of clause 24, wherein activating a low-power operation state in the user equipment comprises activating a sleep state of the main receiver and wherein activating a legacy operation state comprises activating an active state of the main receiver.
26. The user equipment of clause 25, wherein the at least one processor is further configured to activate a low-power state of the low-power receiver for skipping monitoring of low-power wake-up signal messages corresponding to the subsequent paging occasions.
27. The user equipment of clause 26, wherein the at least one processor is further configured to modify timing of synchronization signal measurements to be performed using the low-power receiver while the low-power receiver is in the low-power state.
28. The user equipment of clause 27, wherein the at least one processor is further configured to, in response to receiving the paging repetition indication before activating the low-power state of the low-power receiver, perform extra synchronization signal measurements using the low-power receiver.
29. The user equipment of any one of clauses 18 to 28, wherein the at least one processor is further configured to count each upcoming paging occasion in a repetition counter, wherein determining that the number of subsequent paging occasions has been reached comprises determining that the repetition counter has reached the number of subsequent paging occasions.
30. The user equipment of any one of clauses 18 to 29, wherein the message associated with the paging message is the paging message itself, a downlink control information indicating the paging message, or a low-power wake-up signal message corresponding to the paging occasion.
31. The user equipment of any one of clauses 18 to 30, wherein the number of subsequent paging occasions is identified in the paging repetition indication field.
32. The user equipment of clause 31, wherein the paging repetition indication field is a flag and the number of subsequent paging occasions is one.
33. The user equipment of any one of clauses 18 to 32, wherein the at least one processor is further configured to receive a paging repetition configuration enabling receiving and processing the paging repetition indication field by the user equipment.
34. The user equipment of clause 33, wherein the paging repetition configuration further comprises a number of configured repetitions of a paging message, wherein the at least one processor is further configured to determine a current paging occasion position index and determine the number of subsequent paging occasions based on the number of configured repetitions and the current paging occasion position index.

The foregoing description has provided by way of non-limiting examples a full and informative description of the exemplary embodiment of the subject disclosure. However, various modifications and adaptations may become apparent to those skilled in the relevant arts in view of the foregoing description, when read in conjunction with the accompanying drawings and the appended claims. However, all such and similar modifications of the teachings of this disclosure will still fall within the scope of the subject disclosure as defined in the appended claims. Indeed, there is a further embodiment comprising a combination of one or more embodiments with any of the other embodiments previously discussed.

## Claims

1. A method for monitoring paging occasions, the method being performed by a user equipment in idle state or inactive state and comprising:
- receiving a paging repetition configuration comprising a number of configured repetitions of a paging message; and
- in response to determining that the paging message does not comprise a paging record for the user equipment, skipping monitoring of a number of subsequent paging occasions based on the paging repetition configuration.

2. The method of claim 1 further comprising determining a current paging occasion position index and determining the number of subsequent paging occasions based on the number of configured repetitions of a paging message and the current paging occasion position index.

3. The method of claim 2, wherein the number of subsequent paging occasions to be skipped is determined by subtracting the current paging occasion position index modulo the number of configured repetitions of a paging message from the number of configured repetitions of a paging message.

4. The method of any one of claims 1 to 3 further comprising, in response to determining that the number of subsequent paging occasions has been reached, resuming monitoring a next paging occasion.

5. The method of any one of claims 1 to 4, wherein the paging repetition configuration is received via a radio resource control message, configured via a system information message, or predefined.

6. The method of any one of claims 1 to 5 further comprising skipping monitoring of one or more low-power wake-up signal messages corresponding to the subsequent paging occasions and/or one or more paging early indication messages corresponding to the subsequent paging occasions.

7. The method of any one of claims 1 to 6 further comprising receiving a paging repetition indication field in a message associated with a paging message of a paging occasion, wherein the paging indication field indicates that the paging message is repeated according to the paging repetition configuration.

8. The method of claim 7, wherein the message associated with the paging message is the paging message itself, a downlink control information indicating the paging message, or a low-power wake-up signal message corresponding to the paging occasion.

9. A user equipment for monitoring paging comprising:
at least one memory; and
at least one processor;
wherein the at least one processor is configured to, when the user equipment is in idle state or inactive state execute the method according to any one of claims 1 to 8.

10. A method for supporting monitoring of paging occasions, the method being performed by a base station and comprising:
- transmitting a paging repetition configuration comprising a number of configured repetitions of a paging message; and
wherein the paging repetition configuration indicates that a user equipment in idle state or inactive state is allowed to skip monitoring, in response to determining that the paging message does not comprise a paging record for the user equipment, of a number of subsequent paging occasions based on the paging repetition configuration.

11. The method of claim 10, wherein the paging repetition configuration further indicates that the user equipment in idle state or inactive state is allowed, in response to determining that the number of subsequent paging occasions has been reached, to resume monitoring a next paging occasion.

12. The method of claim 10 or claim 11, wherein the paging repetition configuration is received via a radio resource control message, configured via a system information message, or predefined.

13. The method of any one of claims 10 to 12, wherein the paging repetition configuration further indicates that a user equipment in idle state or inactive state is allowed to skip monitoring, in response to determining that the paging message does not comprise a paging record for the user equipment, of one or more low-power wake-up signal messages corresponding to the subsequent paging occasions and/or one or more paging early indication messages corresponding to the subsequent paging occasions.

14. The method of any one of claims 10 to 13 further comprises transmitting a paging repetition indication field in a message associated with a paging message of a paging occasion, wherein the paging indication field indicates that the paging message is repeated according to the paging repetition configuration.

15. The method of claim 14, wherein the message associated with the paging message is the paging message itself, a downlink control information indicating the paging message, or a low-power wake-up signal message corresponding to the paging occasion.

16. A base station for supporting monitoring of paging occasions comprising:
at least one memory; and
at least one processor;
wherein the at least one processor is configured to execute the method according to any one of claims 10 to 15.
